# EUROPEAN PATENT APPLICATION

(11) **EP 4 516 488 A1**
(43) Date of publication of application: **05.03.2025**
(21) Application number: 23194006.5
(22) Date of filing: 29.08.2023
(51) Int. Cl.: B29C 70/30, B25J 15/00, B29C 31/00, B29C 31/08, B29C 33/30, B29C 65/78, B29C 65/00, B29C 70/38, B29C 70/54, B29D 99/00, B32B 38/18, B64F 5/10, F03D 1/06

(54) **METHOD FOR MANUFACTURING A SHELL SECTION FOR A WIND TUR-BINE BLADE AND ASSEMBLY RACK FOR MANUFACTURING A SHELL SECTION FOR A WIND TURBINE BLADE**

(71) Applicant: Siemens Gamesa Renewable Energy A/S, 7330 Brande (DK)
(72) Inventor: Nielsen, Mogens, 9220 Aalborg (DK)
(74) Representative: SGRE-Association

(57) **Abstract**

Method for manufacturing a shell section (17, 28, 53), particularly a half shell section, having a desired section geometry, wherein the shell section (17, 28, 53) is adapted to constitute a section of a wind turbine blade to be produced, wherein the method comprises the steps:
- providing several preform elements (18, 29, 51), each comprising a stack of layers of fiber mats fixated to each other,
- providing an assembly rack (1, 27, 50) with several supporting elements (7) which are arranged in a geometry which corresponds to the section geometry,
- arranging the preform elements (18, 29, 51) on the supporting elements (7) side-by-side such that the preform elements (18, 29, 51) are relatively positioned to each other in a geometry which corresponds to the section geometry, and
- adhering adjacent preform elements (18, 29, 51) with each other to constitute the shell section (17, 28, 53).

## Description

The present invention relates to a method for manufacturing a shell section, particularly a half shell section, having a desired section geometry, wherein the shell section is adapted to constitute a section of a wind turbine blade to be produced. Furthermore, the present invention relates to an assembly rack adapted to be used for manufacturing a shell section which is adapted to constitute a section of a wind turbine blade.

For manufacturing blades for wind turbines, typically pre-manufactured preform elements are used. Preform elements often contain thermoset or thermoplastic binder on reinforcement fabrics. Typically, the binder is activatable by heat, and, when cooling back to room temperature, the reinforcement fabrics are adhered to each other by the binder. Hence, preform elements are typically stacks containing several layers of reinforcement fabrics being in a desired shape.

For manufacturing the final blade or half shell of a blade, the preform elements are typically arranged laterally on the mold surface of a blade mold. Regarding this step, there is the problem that adjacent preform elements, particularly if they comprise an angled lateral surface, often slide off from their designated position because of their own weight, which leads to an unwanted lateral overlap of the preform elements. Additionally, locating the preform elements in the blade mold as precise as it is desired is often cumbersome. Since preform elements typically comprise a large size of several meters and since the respective tolerance regarding the position of the preform elements in the blade mold is quite low such that only small deviations between the actual and the required position are allowed, it is a time-consuming and difficult process to position these elements as precisely as desired. Apart from this, it is typically required to inspect whether the preform elements are correctly positioned in the blade mold after they have been arranged there. It is also difficult and cumbersome to perform this inspection.

It is an object of the present invention to provide an enhanced concept with respect to the manufacturing process of a wind turbine blade, particularly regarding the process of placing preform elements in a blade mold.

This object is achieved by a method as described initially, wherein the method comprises the following steps:
- providing several preform elements, each comprising a stack of layers of fiber mats fixated to each other,
- providing an assembly rack with several supporting elements which are arranged in a geometry which corresponds to the section geometry,
- arranging the preform elements on the supporting elements side-by-side such that the preform elements are relatively positioned to each other in a geometry which corresponds to the section geometry, and
- adhering adjacent preform elements with each other to constitute the shell section.

The present invention concerns the manufacturing process of a shell section which is adapted to be connected with further shell sections to constitute the final wind turbine blade or the final half shell of the wind turbine blade to be produced. The shell section can be a section which spans around a certain part along the circumference of the final blade. This means that several, particularly between two and ten, shell sections can be required to constitute the complete circumference of the final blade. Preferably, the shell section is a half shell section, i.e., a section which provides one half of the circumference of the final blade. That means that two respective half sections are required to realize the complete circumference of blade. The half shell section can be part of a half shell realizing the pressure side of the blade or a part of a half shell realizing the suction side of the blade. The shell section can be a third shell section such that three respective sections are required to realize the complete circumference of blade. The shell section can be a quarter shell section such that four respective sections are required to realize the complete circumference of blade etc.

The circumference of the final blade can be between 5 and 30 meters, particularly between 10 and 20 meters. Regarding the longitudinal extension of the blade, the shell section typically realizes only a part of the complete longitudinal extension. Particularly, more than three, particularly more than five, shell sections being arranged longitudinally to each other can be required to realize the complete blade. While the blade can have a total length of several tens of meters or even more than a hundred of meters, the length of the shell section can be between 1 and 30 meters, particularly between 12 and 16 meters, wherein the width of the shell section can be between 1 and 10 meters, particularly between 2.5 and 5 meters.

The desired section geometry of the shell section is the shape of this component after being manufactured. The desired section geometry is defined or given by the desired shape of the blade to be produced, namely regarding the blade section which is constituted by the respective shell section. Hence, the sum of the desired section geometries of all shell sections which are used for manufacturing the complete blade results in the overall geometry or shape of the blade. Concretely, the section geometry can be or describe a, particularly bent, two-dimensional curve which defines the surface of the blade or shell section, respectively.

According to the present invention, several preform elements, for instance as described above, are provided. Each of the preform elements comprises several fiber mats which are adhered to each other. The fiber mats can consist of glass-, carbon-, and/or plastic fibers. For producing the preform elements, the layers of fiber- or fabric mats, which realize an enforcement means for the respective preform element, are arranged in a preform mold having a shape which corresponds to the designated shape of the preform element to be produced. The fiber mats are impregnated with a binding agent, e.g., with a powder binder. Applying heat to the stack can activate the binding agent to adhere the layers to each other and to conserve the current shape of the respective preform element. In addition to the fiber- or fabric mats, the preform element(s) can comprise at least one core component. The core component can consist of balsa wood and/or a foam material and/or a plastic material, particularly PET. In any case, the preform element(s) eventually comprise a sandwich-like structure.

Additionally, the assembly rack is provided. The assembly rack is adapted to carry all preform elements used for producing the respective shell section. More precisely, the assembly rack comprises supporting elements on which the preform elements are located. The supporting elements are arranged relatively to each other such that they or support plates of the supporting elements are positioned within a geometry which corresponds to or equals the section geometry.

The preform elements are arranged or located on the supporting elements side-by-side. That means that the preform elements are located next to each other such that they particularly form a mosaic like structure. The number of preform elements which are arranged or located on the supporting elements can be between two and ten. Particularly, two or three preform elements can be arranged laterally to each other to constitute the respective shell section. Assuming that the shell section is the half shell section, a certain number of, preferably three, preform elements can be arranged laterally next to each other on the supporting elements. It is possible that the handling of the half shell section is cumbersome, particularly because of its size. In this case, the number of preform elements which are arranged laterally to each other can be decreased, particularly to two, such that the resulting size of the shell section is smaller. In this case, a third- or quarter shell section or the like can be constituted.

Since the supporting elements are arranged in a geometry which corresponds to or equals the section geometry, the same holds true for the respectively arranged preform elements. Particularly if the supporting elements are spaced apart from each other, the preform elements arranged thereon are accessible from both sides such that manual corrections and/or inspections regarding the designated positions are simplified.

Next, after the preform elements are brought into their designated positions relatively to each other on the supporting elements, they are adhered to each other to conserve the designated shape and to build or finalize the shell section. Adhering the preform elements to each other leads to provisory attaching positions or -areas which are sufficiently strong that the shell section can be further handled without that the shell section loose its designated shape. The attaching positions can be spot- or point-like such that the preform elements are adhered or pinned to each other at certain positions. The attaching areas can be stripe- or seam-like such that the preform elements are adhered to each other along their, for instance complete, lateral sides.

The manufactured shell section is adapted to be used for manufacturing the blade or half shell of a blade. For this, at is has described initially, the preform elements are brought on a mold surface of a blade mold. By using the shell section, the problems which have been described above in this context are overcome. The preform elements being a part of the shell section which is arranged within the blade mold are already in their desired relative positions to each other. Particularly, the problems regarding the relative sliding and the exact positioning of the preform elements within the blade mold are solved by using the shell section.

After the shell section, particularly together with at least one further shell section, have been arranged in the blade mold, an adhering- or stiffening step is performed to gain the final mechanical stability of the blade and particularly to adhere the shell sections with each other. For this, resin can be injected into a mold cavity where the shell section(s) is or are arranged and eventually cured.

Regarding the step of arranging the preform elements on the supporting elements of the assembly rack, in a possible embodiment of the present invention, adjacent preform elements can be laterally in contact with each other after being arranged on the supporting elements. Being in contact with each other means that the respective supporting elements touch each other at their lateral sections or edges such that there is no free space between them. Hence, it becomes easier to adhere the preform elements with each other. Preferably, lateral sections or edges of adjacent preform elements can overlap each other. The overlapping regions or edges of the preform elements can comprise shapes which correspond to each other, i.e., which are negatives to each other. The preform elements typically comprise a constant thickness. Hence, preferably, the total thickness of the overlapping edges of two adjacent preform elements can equal this constant thickness. Particularly, the lateral sections have a tilted, particularly wedge-like, shape. In other words, the preform elements can comprise an angled lateral surface.

In a preferred embodiment of the present invention, the fiber mats of each of the preform elements are fixated to each other by means of a heat-activated binding agent, wherein the adjacent preform elements are adhered with each other by at least partially heating their lateral sections to re-activate the binding agent. As it has already been explained, the binding agent can be a powder binder. The attaching positions or -areas are defined by the regions of the preform elements which are heated after the preform elements have been arranged on the supporting elements. This re-heating causes a melting or liquidation of the binding agent such that the binding agent of two adjacent preform elements converge and provide a firm binder connection after curing the binding agent again. Advantageously, an already present component or means of the preform elements, namely the binding agent, is used to adhere the preform elements with each other. Alternatively, but less preferred, a separate glue or adhesive can be used for this purpose.

The preform elements can be arranged on the supporting elements without being attached thereto, i.e., the preform elements can be held in their positions by their own weight only. Preferably, however, after being arranged on the supporting elements, the preform elements can be gripped by gripper elements of the supporting elements to fasten or conserve the relative positions between the preform elements. Gripping the preform elements means that the respective preform element is temporarily fastened or attached to the respective supporting element. By this measure, the relative positions between the preform elements are protected from being shifted unwantedly, e.g., by incidental hits or sliding. After the preform elements are adhered to each other, the gripping between the preform elements and the respective supporting elements can be released.

Additionally, the object of the present invention is achieved by an assembly rack as described initially, wherein the assembly rack is adapted to be used for the method as described above. The assembly rack according to the present invention comprises several supporting elements which are arranged in a geometry which corresponds to a desired section geometry of the shell section which extends around a part of the circumference of the blade, particularly at least around a quarter or at least around a third of the circumference of the blade. All features, aspects and advantages which are described with respect to the method according to the present invention can be applied to the assembly rack according to the present invention and vice versa.

As it has already been described in the context of the method according to the present invention, the supporting elements of the assembly rack are arranged in a geometry which corresponds to the desired section geometry of the shell section. The respective shell section extends at least around a certain part, particularly around one third, of the circumference of the blade. Hence, the same holds true for the geometry in which the supporting elements are arranged. For the case that the shell section extends at least around one third of the circumference of the blade, this means that, referring to a central point of the cross-section of the blade, the respective shell section covers an angle of at least 120°. Preferably this angle is 180° which particularly means that the shell section is a half shell section. It is possible that the respective shell section extends up to around two thirds of the circumference of the blade. The assembly rack can comprise an elongated structure. Regarding the respective cross-section of the assembly rack, the line on which the supporting elements are arranged corresponds to the respective cross-sectional line of the blade to be produced, namely at the longitudinal and circumferential position where the shell section to be manufactured will be located.

Preferably, at least one of the supporting elements comprises a heating means and/or at least one heating device, particularly being a heating blanket, is provided which is releasably fixable to the supporting elements or to another component of the assembly rack, wherein the heating means and/or the heating device is adapted to generate heat which is transferrable to the preform elements arranged thereon to activate the binding agent. The heating means and/or the heating device are in a thermal contact with the preform element(s) arranged thereon such that heat which is produced by the heating means and/or the heating device is transferred to the preform element(s). The heat transfer is effective enough that the temperature of the preform element(s) can raise above the activation temperature of the binding agent. Most preferably, the heating means is integrated only in some, i.e., not in all, of the supporting elements, for instance in the supporting elements which area located where two adjacent preform elements are in contact with each other. The heating means and/or the heating device can be or comprise an electric heater. The heating device can be stripe- and/or blanket-like. The heating device can be arranged, particularly on the supporting elements along a common seam which is constituted between two adjacent preform elements, wherein a stripe-like attaching area is realized between these elements.

In a preferred embodiment, at least one of the supporting elements comprises a gripper element for gripping the preform elements arranged thereon. The gripper element is adapted to create an attaching force which prevents a change of the relative position between the supporting element and the preform element(s) arranged thereon. The gripper elements can be or can comprise needle grippers and/or vacuum grippers and/or Bernoulli grippers and/or vortex grippers. Needle grippers comprise at least one needle which can be moved out from and retracted into the supporting element or support plate, respectively. When being moved out from the interior of the supporting element or support plate, respectively, the at least one needle protrudes from its surface and penetrates the preform element arranged thereon. Hence, the preform element(s) being positioned on the respective supporting element is held by the at least one needle in position. Several needles can be provided which can be arranged tilted to each other and to this surface. In other words, several needles which can be moved out from the support plate into different directions can be provided. Vacuum grippers typically are or comprise a suction cup, therein a vacuum can be created between the vacuum gripper and the preform element, particularly by a vacuum pump, to hold the preform element in position. Bernoulli grippers and vortex grippers create an airflow between the gripper element and the preform element such that a holding force holding the preform element on the gripper element is created because of the Bernoulli effect. The heating means as described above can be integrated in the gripper element.

The assembly rack according to the present invention can comprise a frame with several carrier bars on which the supporting elements are attached. The frame can be lattice-like such that the preform elements being arranged on or held by the supporting elements can be reached by both sides. The bars which constitute the frame can be made of a metal, for instance steel. There can be longitudinal bars which extend along the longitudinal direction of the assembly rack. There can be cross-sectional bars, wherein at least a part of these bars can be the carrier bars, which extend along the cross-section of the assembly rack. The carrier bars can have a bent structure or shape which corresponds to the section geometry. Preferably, the frame comprises transport rollers or -wheels to allow an easy transportation of the frame and, hence, of the preform elements or shell section, respectively.

The relative positions of the supporting elements to each other can be adjustable and lockable. In this embodiment, the assembly rack does comprise a changeable structure regarding the geometry in which the supporting elements are arranged. Hence, the assembly rack can be used for manufacturing different shell sections having different shapes and geometries.

In a possible embodiment of the invention, at least one of the supporting elements is movable along the respective carrier bar being a sliding rail. Hence, the supporting elements can be brought into the ideal position depending on the shape and/or size of the preform elements. Particularly, the supporting elements comprising the heating means can be brought into the position where two adjacent preform elements are in contact with each other and, hence, build a common seam. Serval supporting elements and, thus, heating means can be arranged along the longitudinal direction of this seam. At least one of the supporting elements can be movable perpendicularly with respect to the respective carrier bar. Moving the supporting elements perpendicularly to the carrier bar changes the diameter of the section geometry. The supporting elements are lockable in the respective positions, e.g., by using clamping- and/or screwing devices.

If the carrier bar is the sliding rail, the at least one movable supporting element can be connected with a sliding shoe which is guided in the respective sliding rail. In this embodiment, the sliding shoe and, hence, the respective supporting element is movable along the longitudinal direction of the sliding rail. The sliding rail and the sliding shoe can have cross-sections which correspond to each other. Particularly, the cross-section of the sliding rail comprises a U-shape, wherein on the open ends of vertical bars of the U-shape protrusions which face each other can be arranged such that the sliding shoe, which comprises a cross-section which corresponds to the interior of the U-shape, is undetachably arranged within the sliding rail.

The at least one movable supporting element can be or comprise a support plate on which the respective preform element is arrangeable. The support plate can be made of hard foam. Optional heating means and/or gripper elements can be arranged within the support plate, particularly within an opening or gap of the support plate. Preferably, the support plate is height-adjustable with respect to the respective carrier bar. The support plate can be connected with one end of a threaded bar, wherein the other end of the threaded bar can be connected with the sliding shoe. The threaded bar can be arranged within an internal thread of the sliding shoe such that screwing the threaded bar changes the height of the support plate.

The assembly rack according to the present invention can have a concave shape such that it is adapted to be used for manufacturing a shell section which has a concave section geometry. In this embodiment, the cross-sectional geometry is a U- or C-shape which is open upwards. Alternatively, the assembly rack according to the present invention can have a convex shape such that it is adapted to be used for manufacturing a shell section which has a convex section geometry. In this embodiment, the cross-sectional geometry is a U- or C-shape which is open downwards. Concretely, the carrier bars can have the respective U- or C-shape.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a perspective view on a first embodiment of an assembly rack according to the present invention,
- Fig. 2: a detailed view on a supporting element of the assembly rack of fig. 1,
- Fig. 3: a detailed view on a gripper element of the supporting element of fig. 2,
- Fig. 4: a perspective view on the assembly rack of fig. 1 being equipped with preform elements as one step of a first embodiment of a method according to the present invention for manufacturing a shell section,
- Fig. 5-8: perspective views regarding subsequent manufacturing steps for manufacturing a half shell of a wind turbine blade using the manufactured shell section,

- Fig. 9: a perspective view on a second embodiment of an assembly rack according to the present invention,
- Fig. 10: a perspective view on the assembly rack of fig. 9 being equipped with preform elements as one step of a second embodiment of a method according to the present invention for manufacturing a shell section,
- Fig. 11-14: perspective views regarding subsequent manufacturing steps for manufacturing a wind turbine blade using the manufactured shell section,
- Fig. 15-16: perspective views on a further embodiment of the assembly rack being equipped with preform elements as one step of a further embodiment of a method according to the present invention for manufacturing a shell section.

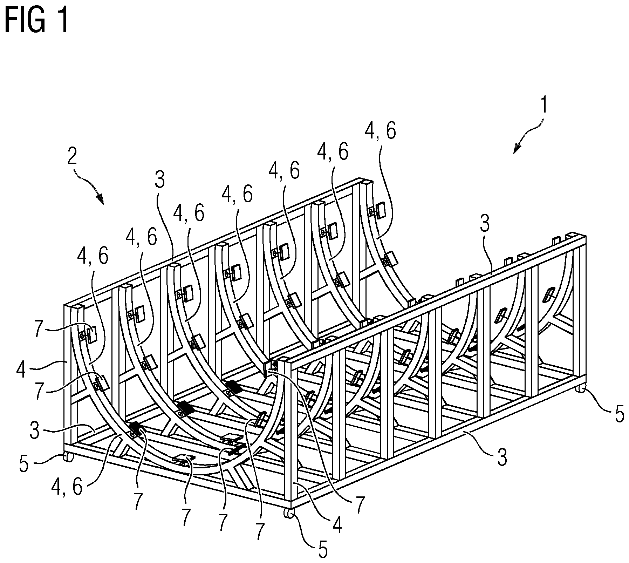

Fig. 1 shows a perspective view on an assembly rack 1 according to a first embodiment of the present invention. The assembly rack 1 comprises a lattice-like frame 2 with several longitudinal bars 3 and cross-sectional bars 4. The longitudinal bars 3 extend along a longitudinal or axial direction of the assembly rack 1. The cross-sectional bars 4 extend perpendicular to this direction. The bars 3, 4 are made of a metal like steel. The frame 2 comprises transport rollers or -wheels 5 to allow an easy transportation of the assembly rack 1.

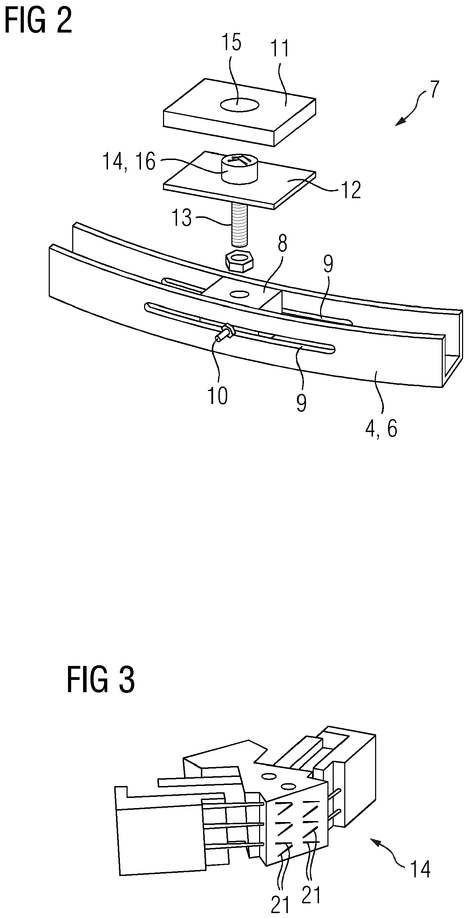

Some of the cross-sectional bars 4 have a bent structure to provide a concave geometry of the assembly rack 1. These bars 4 are carrier bars 6 which carry supporting elements 7 or on which supporting elements 7 are arranged. A close-up view on one of the supporting elements 7 and on the respective carrier bar 6 is shown in fig. 2. The supporting element 7 is movable along the longitudinal direction of the carrier bar 6 which, hence, is a sliding rail. For this, the supporting element 7 is connected with a sliding shoe 8 which is guided within the U-shaped cross section of the carrier bar 6. The carrier bar 6 comprises lateral slits 9 through which a clamping means 10 is provided to lock the longitudinal position of the respective supporting element 7.

The supporting element 7 comprises or is a support plate 11 being made of a hard foam and being arranged on a metal plate 12. The supporting element 7 or support plate 11, respectively, is connected with one end of a threaded bar 13, which is connected with the sliding shoe 8 on its other end. The threaded bar 13 is arranged within an internal thread of the sliding shoe 8 such that screwing the threaded bar changes the distance between the supporting elements 7 and the carrier bar 6. Thus, the support plate 11 is movable perpendicularly with respect to the longitudinal direction of the carrier bar 6 and, hence, height-adjustable with respect to the carrier bar 6.

Each of the supporting elements 7 comprises a gripper element 14 which is arranged within an opening 15 of the support plate 11. A detailed view of the gripper element 14 is shown in fig. 3. The gripper element 14 is a needle gripper comprising several needles 21 which can be moved out from and retracted into the surface of the support plate 11. Alternatively, the gripper elements 14 can be vacuum grippers and/or Bernoulli grippers and/or vortex grippers. The purpose of the gripper element 14 will be described later.

Additionally, some of the supporting elements 7 comprise a heating means 16 being electric heaters, wherein the heating means 16 is not explicitly shown in the figures but indicated schematically. The heating means 16 are integrated in the gripper element 14 or in the support plate 11. In contrast to the gripper elements 14, not all supporting elements 7 comprise a heating means 16. Referring to fig. 1, the supporting elements 7 which comprise a heating means 16 are marked by black color. Hence, as seen from the left to the right in fig. 1, i.e., into the longitudinal direction of the assembly rack 1, the supporting elements 7 which are located on the 5- and 7 o'clock position comprise heating means 16.

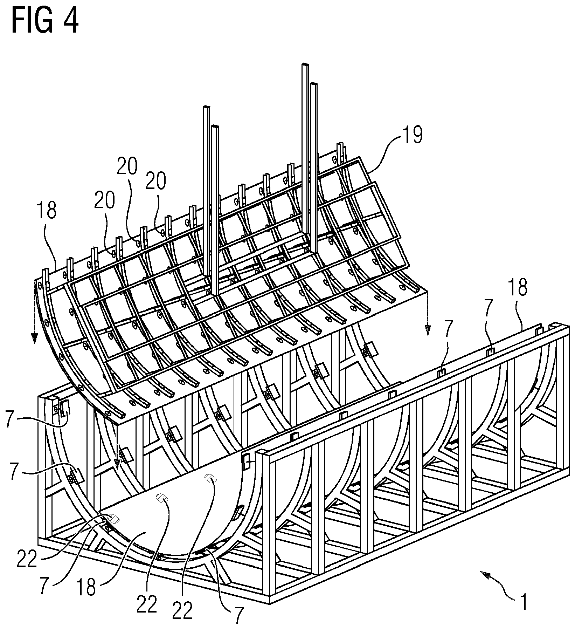

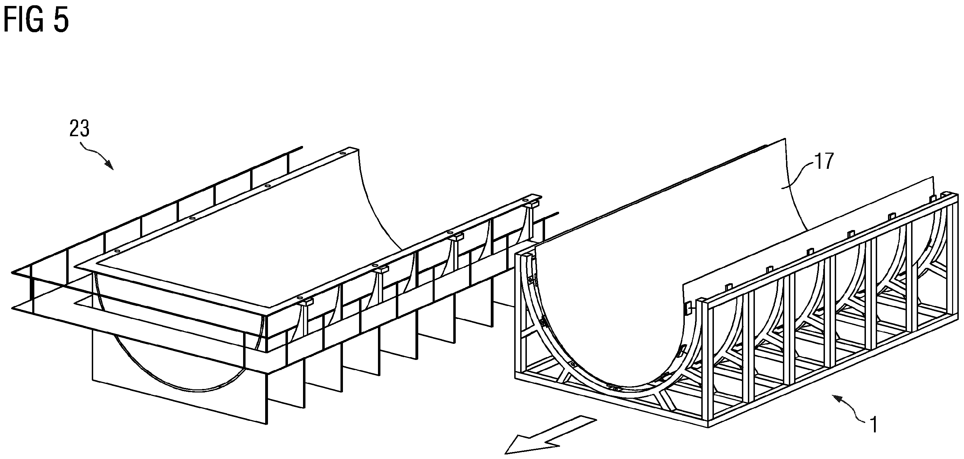

Next, a first embodiment of the method according to the present invention is explained with the help of fig. 4, wherein the assembly rack 1 which has been explained with the help of figures 1 to 3 is used. The aim of this method is to manufacture a shell section 17 (see fig. 5) which is made of several pre-manufactured preform elements 18. The shell section 17 is a half shell section for a root section of a wind turbine blade to be produced subsequently.

Each of the preform elements 18 comprises a stack of layers of fiber- or fabric mats fixated to each other. The fiber mats consist of glass-, carbon-, and/or plastic fibers. For producing the preform elements 18, the layers of fiber- or fabric mats are arranged in a preform mold which comprises a shape which corresponds to the designated shape of the preform element 18 or part of the shell section 17, respectively, to be produced. The fiber mats are impregnated with a binding agent being a powder binder. Applying heat to the stack activates the binding agent to adhere the layers to each other and to conserve their shape. These details regarding the manufacturing and the structure of the preform elements 18 are not shown in the figures.

Referring to fig. 4 again, exemplarily three preform elements 18 are used to manufacture the shell section 17. In the situation of fig. 4, two preform elements 18 are already positioned in the assembly rack 1, while the third preform element 18 is currently lowered into its designated position on the assembly rack 1 using a yoke 19 and a lifting means like a crane. The overall geometry of the shell section 17 to be produced, which is a concave geometry, is the same geometry in which the supporting elements 7 are arranged. For this purpose, the relative positions between the supporting elements 7 are adjusted and fixated as it has been explained with the help of fig. 2. The preform elements 18 are arranged on the supporting elements 7 side-by-side.

The yoke 19 comprises a lattice- or frame-like structure having several holding elements 20 arranged thereon which are used to hold the preform element. The basic principle of the holding elements 20 is the same as of the supporting elements 7, i.e., the yoke 19 comprises sliding rails having sliding shoes arranged therein, whereby a threaded bar is connected with the sliding shoe on its one end and with a suction cup on its other end. Hence, the holding elements 20 are realized by vacuum grippers. The preform elements 18 are lowered into the assembly rack 1 and released by the holding elements 20 such that they are relatively positioned to each other and build an overall geometry which corresponds to the desired geometry of the shell section 17. The preform elements 18 are accessible from both sides which allows for fine corrections and inspections regarding their designated positions in the next step.

Each of the three preform elements 18 have a longitudinal direction which extends parallel to the longitudinal direction of the assembly rack 1 when being arranged therein. Adjacent preform elements 18 are arranged such that they are laterally in contact with each other. More precisely, lateral sections or edges of adjacent preform elements 18 overlap each other. The lateral sections of the preform elements 18 have a tilted or wedge-like shape. The overlapping and tilted edges of the preform elements 18 have shapes which correspond to each other such that the total thickness of the overlapping edges of the adjacent preform elements 18 equals the constant thickness of the remaining areas of the preform elements 18.

After placing the preform elements 18 on the supporting elements 7, the needles 21 of the gripper elements 14 are moved out such that they protrude from the support plate 11 and fix the preform elements 18 in their current positions. Since the needles 21 are tilted to each other, the preform elements 18 are protected from sliding away regarding all possible directions. The relative positions between the preform elements 18 are securely fastened by the gripper elements 14.

Next, the preform elements 18 are adhered with each other by heating parts of their lateral, overlapping edges. For this, the heating means 16 generate heat which is transferred to the overlapping edges, wherein the respective heated sections which constitute spot-like attaching positions 22 are indicated by hatchings in fig. 4. The re-heating causes the already activated binding agent to melt such that the binding agent of two adjacent preform elements 18 converge and provide a firm binder connection after being cured again.

While the production process of the shell section 17 is basically finished after the preform elements 18 have been adhered to each other, in the following, subsequent manufacturing steps for manufacturing a half shell of a wind turbine blade using the manufactured shell section 17 will be described with the help of figures 5 to 8. Referring to fig. 5, the assembly rack 1 is moved close to a blade half mold 23. The transport rollers or -wheels 5 make it possible to load the assembly rack 1 in one place and then to bring it to a new location, i.e., close to the blade half mold 23. As it becomes apparent from fig. 5, a mold surface of the blade half mold 23 comprises the same geometry as the shell section 17. The blade half mold 23 has a longitudinal elongation which is larger than that longitudinal elongation of the shell section 17. I.e., except from the shell section 17, further shell sections will be arranged in the blade half mold 23 along its longitudinal direction to finally build the half shell of the wind turbine blade.

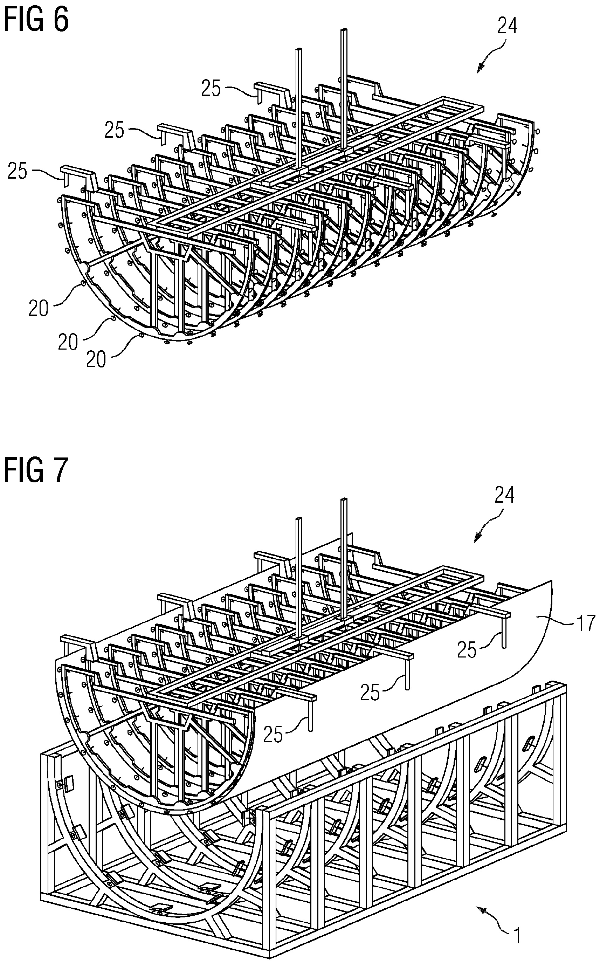

Fig. 6 shows a lifting yoke 24, wherein the aspects which have been explained with the help of the yoke 19 also apply for the lifting yoke 24. Hence, the lifting yoke 24 comprises a lattice- or frame-like structure having several movable holding elements 20 arranged thereon. The holding elements 20 are arranged in a geometry which corresponds to the section geometry. The lifting yoke 24 together with the lifting means like the crane are adapted to lift all preform elements 18 which constitute the shell section 17 during one step. In other words, the complete shell section 17 is lifted by the lifting yoke 24. For this, the lifting yoke 24 is lowered into the assembly rack 1, the holding elements 20 of the lifting yoke 24 grip the shell section 17 after the gripper elements 14 have released the shell section 17. Next, the shell section 17 is lifted away from the assembly rack 1 (see fig. 7) .

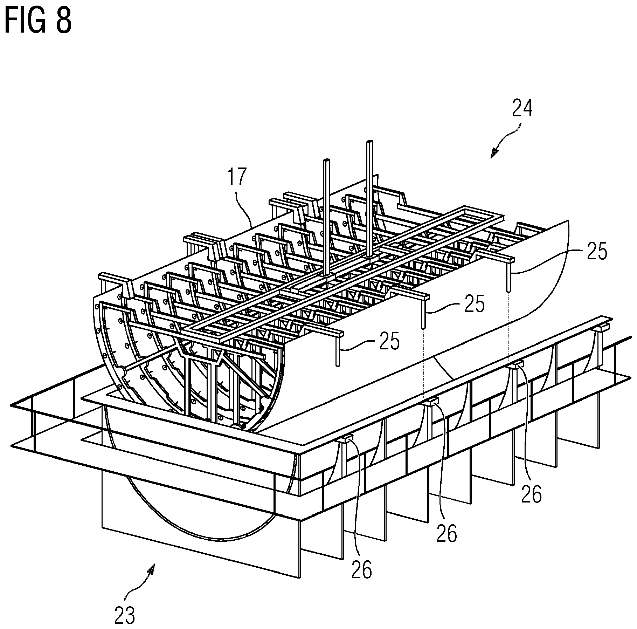

Next, referring to fig. 8, the shell section 17 is lifted to the blade half mold 23 and lowered onto the mold surface. To ensure a correct positioning of the shell section 17, the lifting yoke 24 comprises guide pins 25 that fit with guide holes 26 of the blade half mold 23. Hence, when lowering the lifting yoke 24, the guide pins 25 are inserted into the guide holes 26. Speaking more generally, the lifting yoke 24 can comprise at least one yoke guiding element, particularly being the guide pin 25, and the blade half mold 23 can comprise at least one mold guiding element, particularly being the guide hole 26, wherein, for placing the half shell section 17 on the blade half mold 23, the at least one yoke guiding element is inserted into the at least one mold guiding or vice versa.

Once the shell section 17 has reached its designated position in the blade half mold 23, the holding elements 20 of the lifting yoke 24 release the shell section 17 and the lifting yoke 24 is brought away. The final blade half shell is then manufactured by closing a mold cavity which is constituted by the blade half mold 23 and in which the shell section 17 is arranged. Resin is injected into the mold cavity and cured. The final blade is then manufactured by gluing to blade half shells which have been manufactured as described above together.

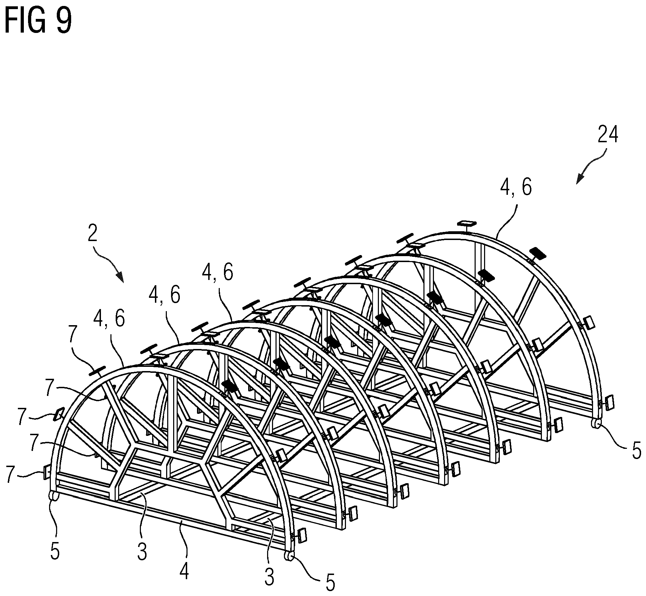

Fig. 9 shows a three-dimensional view on an assembly rack 27 according to a second embodiment of the present invention. Basically, the aspects which have been explained with respect to the first embodiment of the assembly rack 1 with the help of figures 1 to 3 also hold true for the assembly rack 27 of fig. 9. A difference, however, is that the geometry in which the supporting elements 7 are arranged, is a convex geometry such that the overall geometry of the shell section 28 to be produced is a convex geometry as well.

Also, the assembly rack 27 comprises a lattice-like frame 2 with several longitudinal bars 3 and cross-sectional bars 4, wherein transport rollers or -wheels 5 are provided. Some of the cross-sectional bars 4 have a bent structure to provide the convex geometry of the assembly rack 1. These bent cross-sectional bars 4 constitute carrier bars 6 which carry supporting elements 7. The supporting elements 7 are movable as well such that the aspects which have been described with the help of figures 2 and 3 also holds true for the supporting elements 7 of the assembly rack 27. Particularly, the supporting elements 7 of the assembly rack 27 also comprise gripper elements 14 and, some of them, heating means 16.

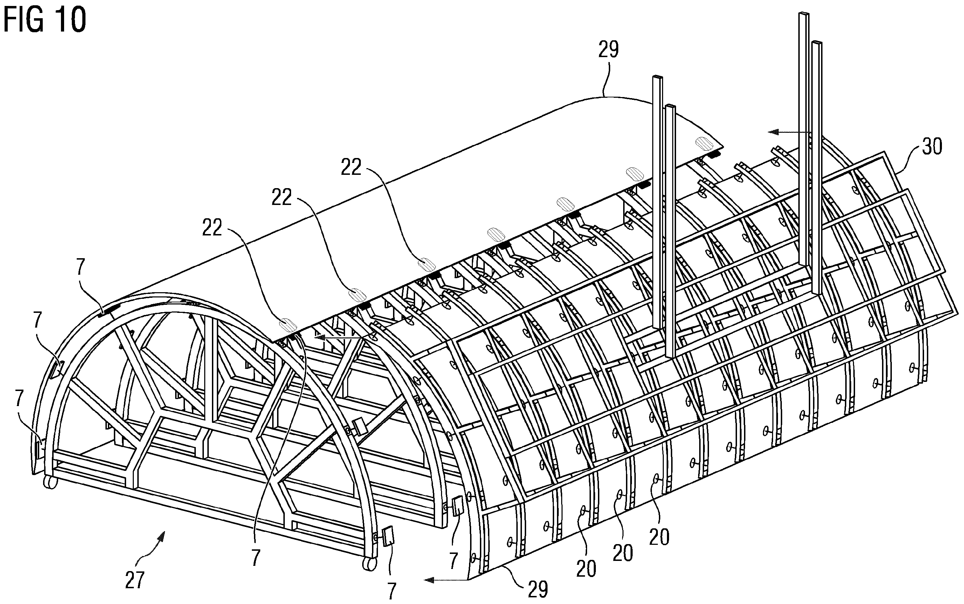

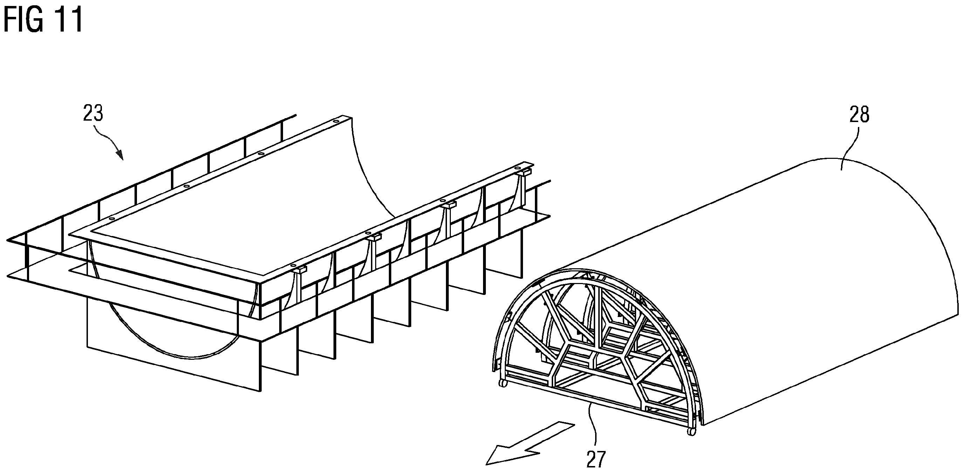

Next, a second embodiment of the method according to the present invention is explained with the help of fig. 10, wherein the assembly rack 27 which has been explained with the help of fig. 9 is used. The aim of this method is to manufacture a shell section 28 (see fig. 11) which is made of several pre-manufactured preform elements 29. All aspects which have been explained with the help of the preform elements 18 also hold true for the preform elements 29. One difference, however, is that the preform elements 29 comprise a convex shape or geometry, while the preform elements 18 comprise a concave shape or geometry.

To manufacture the shell section 28, three preform elements 29 are used. In the situation shown in fig. 10, two preform elements 29 are already positioned on the assembly rack 27, while the last preform element 29 is currently lowered into its designated position on the assembly rack 27. The convex geometry of the shell section 28 to be produced is the same geometry in which the supporting elements 7 are arranged. The preform elements 29 are arranged on the supporting elements 7 side-by-side using a yoke 30 which basically correspond to the yoke 19 of fig. 4. After the preform elements 29 have been arranged on the assembly rack 27, which happens according to the steps which have been explained with the help of fig. 4, the preform elements 29 are fixed to the supporting elements 7 by the gripper elements 14. Next, using the heating means 16, attaching positions 22 are created in the overlapping region of two adjacent preform elements 29 to adhere these preform elements 29 to each other. The production process of the shell section 28 is finished with this step.

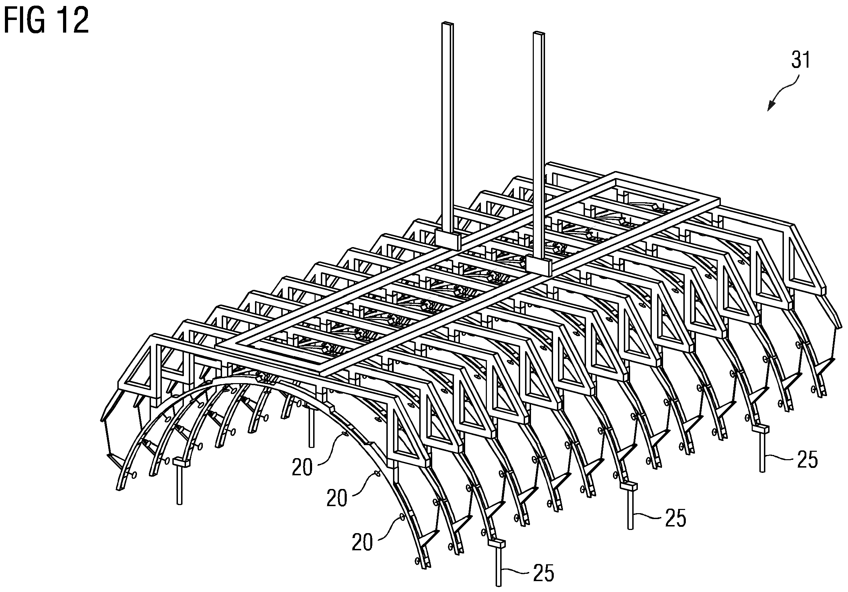

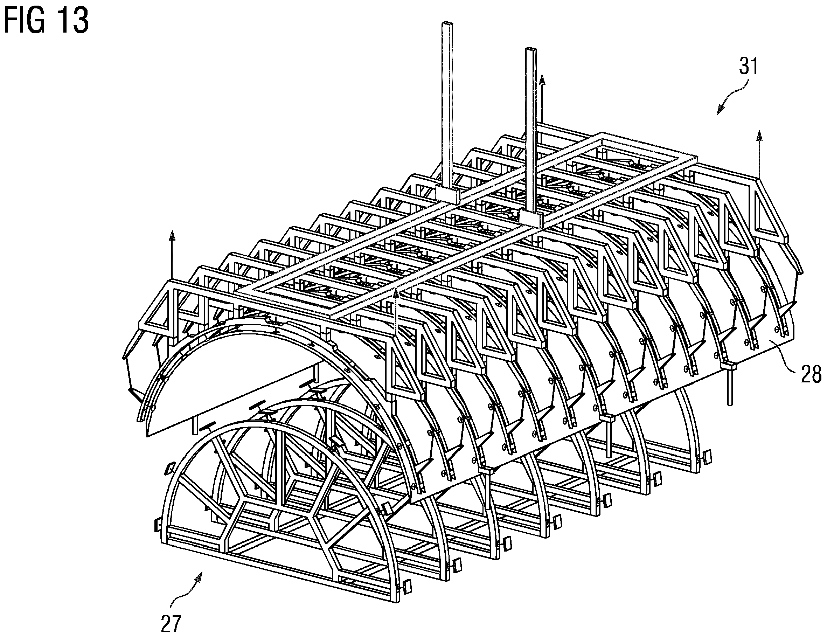

Next, steps for manufacturing a wind turbine blade using the manufactured shell section 28 will be described with the help of figures 11 to 14. Referring to fig. 11, the assembly rack 27 is moved close to the blade half mold 23 using the transport rollers or -wheels 5. Fig. 12 shows a lifting yoke 31, which, apart from its convex shape or geometry, corresponds to the lifting yoke 24 of figures 6 to 8. Referring to fig. 13, the lifting yoke 31 is lowered onto the assembly rack 27, its holding elements 20 grip the shell section 28, and the gripper elements 14 release the shell section 28. Next, the shell section 28 is lifted away from the assembly rack 27 by the lifting yoke 31.

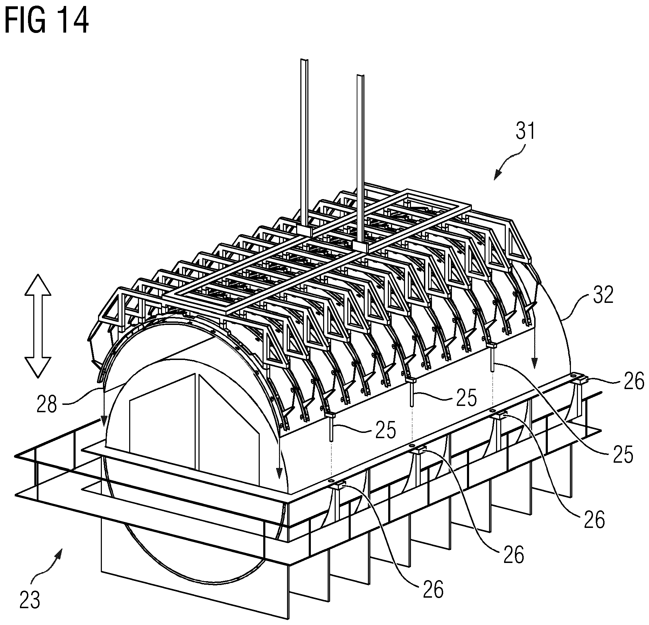

As it can be seen from fig. 14, in the meantime, a concave shell section 17 which has been manufactured as explained with the help of fig. 4 has been arranged in the blade half mold 23. On the blade half mold 23, a structural element 32, particularly being or comprising a mandrel, has been positioned. Fig. 14 shows the situation where the lifting yoke 31 and the shell section 28 are lowered to the blade half mold 23 and positioned to the structural element 32 using mold- and yoke guiding elements 25, 26 as described above.

Once the shell section 28 has reached its designated position on the blade half mold 23 or structural element 32, respectively, the holding elements 20 of the lifting yoke 31 release the shell section 28 and the lifting yoke 31 is lifted away. The final wind turbine blade is then manufactured by closing a mold cavity which is constituted by the blade half mold 23 and wherein the shell sections 17, 28 are arranged. Next, resin is injected into the mold cavity and cured such that the blade is casted in one shot and without any glued joints.

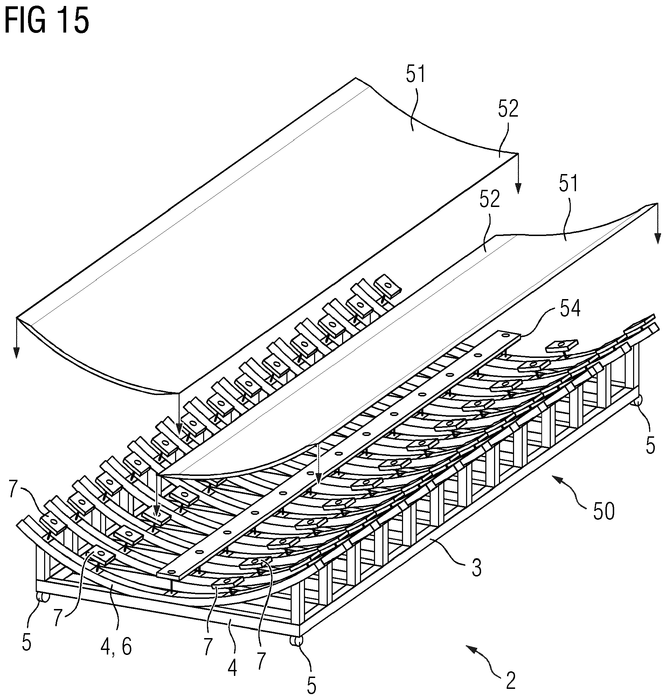

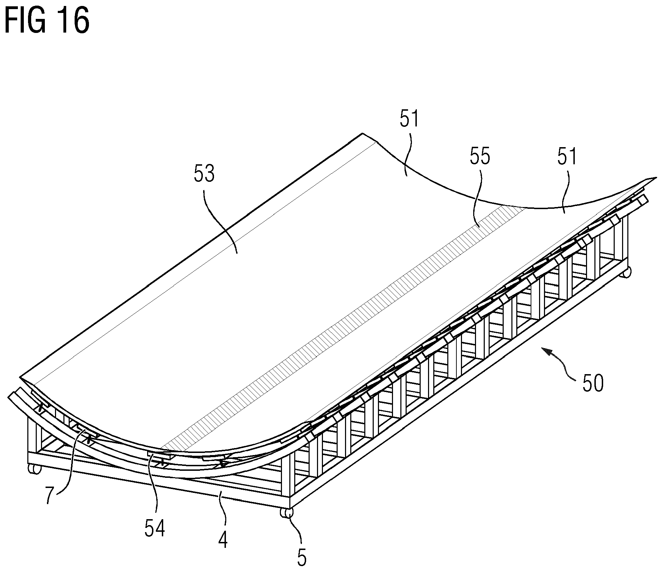

Next, another embodiment of the present invention is explained with the help of figures 15 and 16. All aspects which have been explained with respect to the embodiment which have been explained with the help of figures 1 to 5 basically also hold true for the further embodiment, except from the points which are explained in the following.

Fig. 15 shows an assembly rack 50 being equipped with two preform elements 51 which are used to constitute a shell section 53. Fig. 16 shows the assembly rack 50, wherein the preform elements 51 are already placed thereon. For placing the preform elements 51 on the assembly rack 50, a yoke which is not explicitly shown in the figures and which is similar to the yoke 19 is used. Particularly fig. 15 shows that the lateral sections 52 of the preform elements 51 have a tilted, i.e., a wedge-like shape.

Instead of having heating means 16 being integrated in the gripper elements 14, according to this embodiment, a heating device 54 being a separate component with respect to the supporting elements 7 is releasably attached to one row of supporting elements 7. This row is the row where the preform elements 51 are laterally in contact which each other to constitute a common seam. The heating device 54 is stripe- and blanket-like. Hence, instead of getting spot-like attaching positions 22 (see figures 4, 10), a stripe-like attaching area 55 is realized between the preform elements 51 in the region or vicinity of the lateral sections 52.

After the preform elements 51 are adhered to each other, the resulting shell section 53 is further handled as described with respect to figures 5 to 8. Alternatively, the resulting shell section 53 can be treated as one of the preform elements 18 which have been described with the help of fig. 4.

Although the present invention has been described in detail with reference to the preferred embodiment, the present invention is not limited by the disclosed examples from which the skilled person is able to derive other variations without departing from the scope of the invention.

Independent of the grammatical term usage, individuals with male, female or other gender identities are included within the term.

## Claims

1. Method for manufacturing a shell section (17, 28, 53), particularly a half shell section, having a desired section geometry, wherein the shell section (17, 28, 53) is adapted to constitute a section of a wind turbine blade to be produced, wherein the method comprises the steps:
- providing several preform elements (18, 29, 51), each comprising a stack of layers of fiber mats fixated to each other,
- providing an assembly rack (1, 27, 50) with several supporting elements (7) which are arranged in a geometry which corresponds to the section geometry,
- arranging the preform elements (18, 29, 51) on the supporting elements (7) side-by-side such that the preform elements (18, 29, 51) are relatively positioned to each other in a geometry which corresponds to the section geometry, and
- adhering adjacent preform elements (18, 29, 51) with each other to constitute the shell section (17, 28, 53).

2. Method according to claim 1, **characterized in that** adjacent preform elements (18, 29, 51) are laterally in contact with each other after being arranged on the supporting elements (7).

3. Method according to claim 2, **characterized in that** lateral sections (52) of adjacent preform elements (18, 29, 51) overlap each other.

4. Method according to claim 3, **characterized in that** the lateral sections (52) have a tilted, particularly wedge-like, shape.

5. Method according to one of the claims 2 to 4, **characterized in that** the fiber mats of each of the preform elements (18, 29, 51) are fixated to each other by means of a heat-activated binding agent, wherein the adjacent preform elements (18, 29, 51) are adhered with each other by at least partially heating their lateral sections (52) to re-activate the binding agent.

6. Method according to one of the preceding claims, **characterized in that**, after being arranged on the supporting elements (7), the preform elements (18, 29, 51) are gripped by gripper elements (14) of the supporting elements (7) to fasten the relative positions between the preform elements (18, 29, 51).

7. Assembly rack adapted to be used for a method according to the one of the preceding claims and for manufacturing a shell section (17, 28, 53) which is adapted to constitute a section of a wind turbine blade, wherein the assembly rack (1, 27, 50) comprises several supporting elements (7) which are arranged in a geometry which corresponds to a desired section geometry of the shell section (17, 28, 53) which extends around a part of the circumference of the blade.

8. Assembly rack according to claim 7, **characterized in that** at least one of the supporting elements (7) comprises a heating means (16) and/or that at least one heating device (54), particularly being a heating blanket, is provided which is releasably fixable to the supporting elements (7) or to another component of the assembly rack (1, 27, 50), wherein the heating means (16) and/or the heating device (54) is adapted to generate heat which is transferrable to the preform elements (18, 29, 51) arranged thereon to activate the binding agent.

9. Assembly rack according to claim 7 or 8, **characterized in that** at least one of the supporting elements (7) comprises a gripper element (14) for gripping the preform elements (18, 29, 51) arranged thereon, wherein the gripper elements (14) are or comprise particularly needle grippers and/or vacuum grippers and/or Bernoulli grippers and/or vortex grippers.

10. Assembly rack according to one of the claims 7 to 9, **characterized by** a frame (2) with several carrier bars (6) on which the supporting elements (7) are attached.

11. Assembly rack according to one of the claims 7 to 10, **characterized in that** the relative positions of the supporting elements (7) to each other are adjustable and lockable.

12. Assembly rack according to claim 10 and 11, **characterized in that** at least one of the supporting elements (7) is movable along the respective carrier bar (6) being a sliding rail and/or perpendicularly with respect to the respective carrier bar (6) and lockable in the respective positions.

13. Assembly rack according to claim 12, **characterized in that** the at least one movable supporting element (7) is connected with a sliding shoe (8) which is guided in the respective sliding rail.

14. Assembly rack according to claim 12 or 13, **characterized in that** the at least one movable supporting element (7) is or comprises a support plate (11), particularly made of a hard foam, on which the respective preform element (18, 29, 51) is arrangeable, wherein the support plate (11) is height-adjustable with respect to the respective carrier bar (6).

15. Assembly rack according to one of the claims 7 to 14, **characterized in that** it has a concave or convex shape such that it is adapted to be used for manufacturing a shell section (17, 28, 53) which has a concave or convex section geometry.
